# FASCICULE DE BREVET EUROPEEN

(11) **EP 4 067 829 B1**
(45) Date de publication et mention de la délivrance du brevet: **17.05.2023**
(21) Numéro de dépôt: 22164670.6
(22) Date de dépôt: 28.03.2022
(51) Int. Cl.: G01D 21/00, H04L 12/403, H04L 12/40, G01M 9/06, H04L 67/125, G01D 11/24

(54) **DISPOSITIF DE MESURE A DOUBLE CIRCUITS DE COLLECTE DE DONNEES**
MESSVORRICHTUNG MIT ZWEI SCHALTKREISEN ZUR DATENSAMMLUNG
MEASURING DEVICE WITH DOUBLE CIRCUITS FOR COLLECTING DATA

(30) Priorité: 30.03.2021 FR 2103282
(43) Date de publication de la demande: 05.10.2022
(73) Titulaire: AIRBUS OPERATIONS (S.A.S.), 31060 Toulouse (FR)
(72) Inventeur: DUPE, Nicolas, 31060 TOULOUSE (FR); JEAN, Nicolas, 31060 TOULOUSE (FR); DAJEAN, Cyrille, 31060 TOULOUSE (FR)
(74) Mandataire: Jardel, Marc Henry Philippe

(56) Documents cités:
- FR-A1- 3 015 664
- FR-A1- 3 034 862
- US-A1- 2017 355 449
- US-A1- 2020 031 454

## Description

La présente invention concerne un dispositif de mesure susceptible d'être accolé sur une paroi d'un objet mobile ou d'un objet fixe se trouvant dans un écoulement de fluide pour mesurer des grandeurs physiques. Plus particulièrement, la présente invention s'applique à la mesure de paramètres utilisés pour caractériser un écoulement d'air à la surface d'un aéronef.

Lors d'essais en vol, des capteurs sont montés sur la surface extérieure d'un aéronef pour effectuer différents types de mesure. L'étude des résultats permet de comprendre le comportement d'un aéronef en vol et d'en améliorer ou valider les performances. Selon une application particulière, il est possible par exemple de détecter et localiser des phénomènes aérodynamiques sur l'aéronef.

On connait de la demande de brevet FR3015664 déposé par Airbus Operations SAS un dispositif de mesure comprenant un support présentant des logements pourvu d'une ouverture débouchant vers l'extérieur dans lesquels sont prévus des capteurs. Le support comprend une cavité dans laquelle est logé un circuit imprimé flexible au niveau duquel est prévu un unique circuit de commande lié directement à chacun des capteurs. Les dispositifs de mesure peuvent être chainés pour être répartis sur une surface importante comme celle d'une voilure. Les circuits de commande sont alors connectés les uns aux autres. Lorsqu'un circuit de commande reçoit des données des capteurs auxquels il est connecté, il les rassemble et les transmet au circuit de commande suivant. Or si l'un des circuits de commande tombe en panne, il n'est pas possible de récupérer les données des capteurs dont il a la charge ainsi que de ceux qui suivent.

La présente invention a pour but de proposer un dispositif de mesure permettant d'assurer la récupération des données de la plupart des capteurs du circuit en cas de panne d'un circuit de commande destiné à les collecter et les communiquer.

A cet effet, la présente invention concerne un dispositif de mesure comprenant un support présentant des logements pourvus d'une ouverture débouchant dans lesquels sont prévus des capteurs, le support comprenant une cavité dans laquelle est logé un circuit imprimé flexible caractérisé en ce que le circuit est à bus hiérarchisés comprenant deux bus de communication de données débouchant aux deux extrémités longitudinalement du support et un bus de collecte de données non débouchant, le bus liant des circuits de commande, chaque circuit de commande étant lié à l'un des bus de communication, les capteurs étant liés au bus de manière distribuée de part et d'autre de chaque circuit de commande, l'ensemble des capteurs entre deux circuits de commande transmettant leurs données aux deux circuits de commande les entourant.

De cette manière, lorsqu'un circuit de commande est défectueux, les circuits de commande voisins peuvent prendre le relais.

L'invention prévoit au moins l'une des caractéristiques optionnelles suivantes, prises isolément ou en combinaison.

Chaque circuit de commande comprend un boitier de forme longiligne dont la direction longitudinale est orthogonale à la direction longitudinale du circuit imprimé.

Les capteurs sont disposés sur une ligne parallèle à la direction longitudinale du circuit et parallèle aux bus.

Les capteurs sont disposés sur une ligne parallèle à la direction longitudinale du circuit et parallèle aux bus.

L'invention porte également sur un système de mesure caractérisé en ce qu'il comprend au moins un dispositif de mesure présentant l'une ou plusieurs des caractéristiques susmentionnées, une unité centrale connecté à un dispositif de mesure, au moins un dispositif d'extrémité comprenant une impédance de bout de ligne.

Il comprend un dispositif de rebouclage comprenant un bus de rebouclage dont l'une des extrémités est liée au bus et l'autre extrémité au bus.

Il comprend un dispositif d'extension comportant un circuit imprimé flexible comprenant un seul circuit de commande à l'une des extrémités de liaison du circuit connecté au bus de rebouclage et des capteurs liés à au moins un bus lui-même ou eux-mêmes connectés au circuit.

Le dispositif d'extension comprend deux bus de collecte, les capteurs étant liés à l'un ou l'autre des bus.

Le bus du dispositif d'extrémité et d'extension est lié aux bus de communication du dispositif de mesure à l'aide d'un film conducteur anisotrope.

L'invention se rapporte également à un objet fixe ou mobile présentant une paroi se trouvant dans un écoulement pourvue d'un système de mesure présentant l'une ou plusieurs des caractéristiques susmentionnées.

Les extrémités de rebouclage des dispositifs de mesure sont installées en amont du flux de l'écoulement d'air autour de l'aéronef.

L'objet est un aéronef.

L'invention concerne également un procédé de mesure comprenant un système de mesure présentant l'une ou plusieurs des caractéristiques susmentionnées, caractérisé en ce l'ensemble des capteurs liés au bus de collecte entre deux circuits de commande dits respectivement primaire et secondaire transmettent leurs données auxdits deux circuits par le bus de collecte, l'un desdits circuits, le circuit primaire, transmettant les données desdits capteurs à l'unité par les bus de communication.

Lorsque l'unité ne reçoit plus de données d'un circuit primaire, il donne la main au circuit secondaire correspondant pour les capteurs concernés.

Le circuit secondaire surveille l'activité du bus le liant au circuit primaire associé et en l'absence d'activité, informe l'unité qui demande alors au circuit secondaire de lui transmettre les données des capteurs concernés.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue partielle de dessus d'un aéronef sur la voilure duquel un système de mesure selon la présente invention est installé ;
[Fig. 2] est une vue schématique simplifiée de l'agencement de composants électroniques et des liaisons entre lesdits composants selon une forme de réalisation du système de mesure selon la présente invention ; pour des raisons de simplification, l'ensemble des composants et liaisons n'est pas représenté ;
[Fig. 3] est une vue schématique simplifiée en coupe transversale d'un dispositif de mesure d'un système selon la présente invention ;
[Fig. 4] est une vue de dessus simplifiée d'un circuit imprimé d'un dispositif de mesure selon la présente invention ;
[Fig. 5] est une vue schématique simplifiée de l'agencement de composants électroniques et des liaisons entre lesdits composants selon une forme de réalisation d'un système de mesure selon la présente invention adaptée à la mise en place sur des formes géométriques complexes.

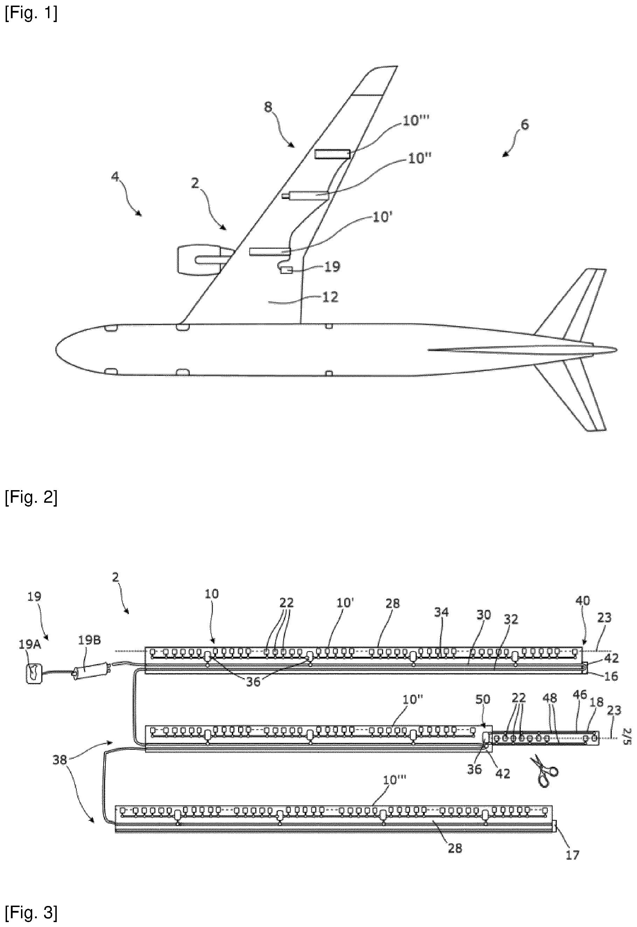

Selon une application illustrative représentée sur la figure 1, le système 2 de mesure selon la présente invention équipe une zone 4 déterminée d'un aéronef 6 : dans l'exemple illustré, le système est mis en place sur la voilure 8. Le système 2 présente plusieurs parties, la troisième partie étant optionnelle. La première partie consiste en un dispositif 10 de mesure de différentes grandeurs physiques susceptible d'être accolé sur une paroi 12 à l'extérieur de l'aéronef et dans l'exemple comme vu plus haut sur la paroi extérieure de la voilure 8 de l'aéronef. Un système 2 de mesure peut comprendre un ou plusieurs dispositifs 10 de mesure désignés sur les figures 1 et 2 par les références 10', 10", 10‴, les dispositifs 10 de mesure étant liés de manière à former une chaîne de dispositifs permettant d'effectuer des mesures sur une surface étendue. La deuxième partie termine un dispositif 10 de mesure soit par un dispositif 16 de rebouclage soit par un dispositif 17 d'extrémité. Le dispositif 16 de rebouclage permet d'assurer la liaison entre les bus débouchant du support comme il sera vu plus loin. Le dispositif 17 d'extrémité termine le dernier dispositif 10 de mesure d'une chaine de dispositifs 10 de mesure : il comprend une impédance de bout de ligne permettant d'assurer la terminaison de la ligne électrique réalisée par la succession de dispositifs de mesure. La troisième partie consiste en un dispositif 18 d'extension également prévu en bout de dispositif de mesure. A l'extrémité d'un dispositif de mesure, se trouve soit un dispositif 16 de rebouclage, soit un dispositif d'extrémité 17 soit un dispositif 18 d'extension. Le dispositif 18 d'extension consiste en un dispositif qui, comme le dispositif 10 de mesure, est susceptible de réaliser des mesures. Cependant, il ne présente pas toutes les caractéristiques d'un dispositif 2 de mesure : il est sécable de manière à adapter la longueur du dispositif 10 de mesure auquel il est associé à l'environnement dans lequel il est installé. La quatrième partie consiste en une unité 19 centrale d'alimentation du ou des dispositifs de mesure 10 et d'extension 18 ainsi que d'acquisition des signaux en provenance dudit ou desdits dispositifs 10 de mesure et d'extension 18. L'unité 19 d'alimentation et d'acquisition est située à l'intérieur de l'aéronef et dans l'exemple illustré à l'intérieur de la voilure. L'unité 19 peut être formée d'un seul bloc ou de plusieurs comme dans la forme illustrée dans laquelle elle comprend une unité 19A d'alimentation et une unité 19B d'acquisition indépendante, les unités 19A et 19B étant connectées. En effet, l'unité 19A d'alimentation peut être une source d'alimentation déjà existante de l'aéronef. Le système 2 de mesure comprend successivement l'unité 19 d'alimentation et d'acquisition, un ou plusieurs dispositifs 10'-10'" de mesure et un ou plusieurs dispositifs 16 de rebouclage, un dispositif 17 d'extrémité et/ou un ou plusieurs dispositifs d'extension 18.

Le dispositif 10 de mesure représenté sur la figure 3 en coupe transversale se présente sous la forme d'un support 20 de capteurs 22 souple permettant d'épouser les contours de l'aéronef 6. Chaque capteur 22 est susceptible de mesurer des grandeurs physiques telles que à titre illustratif et non limitatif la pression, la température, l'accélération, les efforts mécaniques ... Les capteurs 22 peuvent être regroupés dans des unités permettant de faire la mesure de plusieurs grandeurs et par exemple dans un microsystème électromécanique appelé MEMS. Les unités de mesure multi-paramètres de type MEMS seront appelés dans ce qui suit capteur 22. Le support 20 a pour fonction d'offrir un carénage aux capteurs ne nécessitant de ce fait aucune enveloppe particulière et de maintenir les capteurs au plus près de la paroi sur laquelle le dispositif de mesure est disposé pour effectuer les mesures. Le support peut être réalisé en matériau polymère par exemple en polyuréthane ou silicone souple pour épouser les contours de l'aéronef. Ce matériau permet également d'absorber les contraintes thermiques. Il peut être réalisé par moulage, usinage ou tout autre procédé de fabrication connu.

Le support 20 peut présenter tout type de forme. Dans l'exemple illustré, le support présente une forme longiligne de section transversale trapézoïdale. Comme indiqué, le support pourrait se présenter sous une autre forme. Les capteurs 22 sont logés dans la partie centrale du support de plus grande épaisseur. Le support 20 peut recevoir une pluralité de capteurs 22. Les capteurs 22 sont répartis de manière homogène ou pas sur toute ou partie de la longueur du support 20. Selon une forme de réalisation de l'invention illustrée sur la figure 2, les capteurs 22 sont répartis de manière homogène. Chaque capteur 22 est séparé du capteur voisin d'une distance évitant toute interférence dans leur fonctionnement. Comme représenté sur la figure 2, les capteurs 22 sont par exemple disposés sur une même ligne 23 parallèle à la direction longitudinale du support. Des logements 24, représentés sur la figure 3, sont prévus dans le support 20 pour recevoir les capteurs 22 : chaque logement 24 reçoit un capteur 22.

Comme illustré sur la figure 3, le support 20 présente une cavité 26 réalisée dans le support. La cavité 26 reçoit un circuit 28 imprimé flexible (communément appelé flex PCB de l'anglais Printed Circuit Board ou encore circuit flex). La cavité 26 présente une forme correspondant à celle du circuit 28 et épouse les formes de ce circuit. Dans l'exemple illustré, le circuit 28 présente une forme longiligne en adéquation avec celle du support 20. Le circuit 28 et le support 20 suivent une même direction longitudinale. Dans les dispositifs de mesure 2, le circuit 28 est logé dans la cavité débouchant dans les logements 24 dans lesquels s'insèrent les capteurs 22 liés au circuit 28. Les capteurs sont répartis sur le circuit 28. Des plages d'accueil sont prévues offrant des points de connexion sur lesquels sont soudés les points de connexion du capteur 22 au circuit 28 intégré. L'architecture détaillée du support 20 ne sera pas décrite plus en détail car elle n'est pas l'objet de cette demande de brevet. Des architectures sont déjà connues comme celles du brevet susmentionné.

Comme représenté sur la figure 2, le circuit 28 imprimé flexible est à bus hiérarchisés à savoir qu'il comprend deux bus 30, 32 de communication de données débouchant aux deux extrémités longitudinalement du support 20 et un bus 34 de collecte de données non débouchant auquel est lié chaque capteur 22 du support, le bus 34 liant des circuits 36 de commande, les circuits 36 de commande étant répartis entre les capteurs 22 (ou plus précisément entre les liaisons des capteurs 22 avec le bus 34) et liés à l'un des bus 30 de communication de données. Les liaisons des capteurs 22 avec le bus 34 sont distribuées de part et d'autre de chaque circuit 36 de commande. De cette manière, les capteurs 22 entre deux circuits 36 de commande transmettent leurs données aux deux circuits 36 de commande les entourant, comme il sera décrit plus en détail plus loin. Dans la forme illustrée, les liaisons des capteurs 22 avec le bus 34 sont réparties de manière homogène à savoir qu'il y a le même nombre de liaisons de capteurs de part et d'autre d'un circuit 36. Dans la forme de réalisation illustrée, les bus 30, 32 et 34 sont parallèles entre eux et à la direction longitudinale du circuit 28. Ils sont également parallèles à la ligne 23 des capteurs 22. Le support 20 comprend deux extrémités 38, 40 longitudinalement. A l'une de ses extrémités, appelée extrémité de chainage 38, les bus 30 et 32 sont connectés d'un support à l'autre par tout type de moyen connu et par exemple un fil électrique soudé. A l'autre extrémité, appelée extrémité de rebouclage 40, les bus 30 et 32 d'un même support sont liés soit par un dispositif de rebouclage 16, soit par un dispositif 17 d'extrémité, soit par un dispositif d'extension 18. Dans le cas d'un dispositif d'extrémité 17, les bus 30 et 32 sont liés par ladite impédance de bout de ligne. Le dispositif 16 de rebouclage ou le dispositif d'extension 18 lie les extrémités des deux bus 30 et 32 se trouvant du même côté longitudinalement au niveau de l'extrémité 40 de rebouclage. Le dispositif 16 de rebouclage et le dispositif 18 d'extension comprennent chacun un bus 42 formant boucle : lorsque le dispositif 16 ou 18 est accolé au dispositif de mesure 10, le bus 42 a l'une de ses extrémités en liaison avec l'extrémité du bus 30 et l'autre de ses extrémités en liaison avec l'extrémité du bus 32. S'il n'y a qu'un seul dispositif 10 de mesure ou pour le premier dispositif 10 d'une chaine de dispositifs 10 de mesure, l'extrémité du bus 30 au niveau de l'extrémité 38 de chainage est liée à l'unité centrale 19. Pour les autres dispositifs de mesure, l'extrémité du bus 32 du côté de l'extrémité 38 de chainage est connectée au bus 30 d'un autre dispositif de mesure 10. Les extrémités 40 de rebouclage des dispositifs de mesure sont installées en amont du flux de l'écoulement à caractériser, ici l'écoulement d'air autour de l'aéronef, par rapport aux extrémités 38 de chainage. De ce fait, il n'y a aucune liaison entre supports en amont susceptible de modifier le flux et perturber les mesures des capteurs 22. Les liaisons entre dispositifs de mesure sont faites en aval.

Les circuits 36 de commande reçoivent les mesures réalisées par l'ensemble des capteurs 22 se trouvant de part et d'autre de chacun de ceux-ci. Pour les deux circuits 36 de commande extrémaux constituant le premier et le dernier du bus 34 et se trouvant dans la forme illustrée au plus proche de chacune des extrémités 38, 40 longitudinales du support, les données des capteurs 22 se trouvant entre ladite extrémité 38 ou 40 et le circuit 36 correspondant ne sont collectées que par un seul circuit 36. Pour tous les autres circuits 36, les données transmises par les capteurs 22 au bus 34 compris entre deux circuits 36 sont collectées par lesdits deux circuits 36 les encadrant. Les capteurs envoient les données des deux côtés du bus 34 vers les deux circuits qui les entourent. L'un des deux circuits 36 de commande est dit comme primaire car il est chargé d'envoyer les données reçues des capteurs 22 concernés à l'unité 19. L'autre des deux circuits 36 de commande est dit secondaire car reçoit également les données des capteurs mais ne les envoie qu'en cas de panne du circuit primaire. Il existe deux niveaux de surveillance de chaque circuit primaire. Chaque circuit de commande 36 a sa propre adresse et s'identifie auprès de l'unité 19 centrale avec son adresse. Dans un premier niveau de surveillance, si un circuit 36 primaire ne répond plus à l'unité 19 en raison d'une panne et que celle-ci ne reçoit plus de données d'un circuit 36 primaire, l'unité 19 inhibe ledit circuit 36 primaire et demande au circuit 36 secondaire voisin de lui transmettre les données des capteurs attachés audit circuit 36 défectueux. C'est le circuit secondaire qui prend alors la main et transmet les données reçues des capteurs concernés. Dans un deuxième niveau de surveillance, le circuit 36 de commande secondaire surveille les capteurs gérés par le circuit 36 de commande primaire correspondant. Si le circuit 36 secondaire détecte une absence d'activité sur le bus le liant au circuit primaire, il en informe l'unité 19 pour que celle-ci de la même façon que précédemment inhibe ledit circuit 36 primaire et demande audit circuit 36 secondaire de lui transmettre les données des capteurs attachés audit circuit 36 défectueux. Ainsi dans la forme de réalisation illustrée, pour tous les capteurs entourés par deux circuits de commande, le circuit 36 de commande joue un rôle primaire pour tous les capteurs se trouvant à sa droite et un rôle secondaire pour tous les capteurs se trouvant à sa gauche. Chaque circuit 36 de commande est à la fois primaire est secondaire suivant les capteurs considérés. De cette manière si l'un des circuits 36 tombe en panne, un autre circuit 36 prend le relais et assure la communication des données des capteurs considérés. Les deux niveaux de surveillance permettent de couvrir tous les niveaux de disfonctionnement des bus hiérarchisés. Le système procède d'une architecture maître-esclave, l'unité centrale étant maître et gérant les échanges avec les circuits de commande.

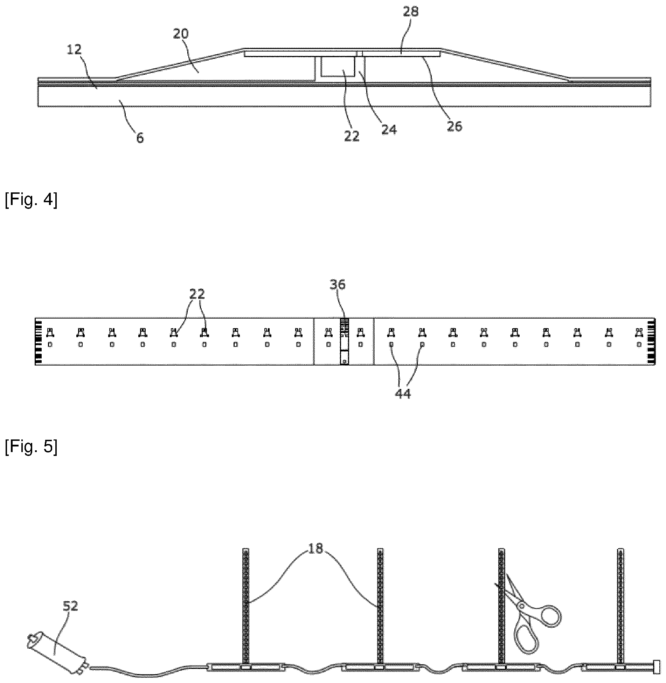

Dans la forme illustrée, le circuit 36 de commande consiste en un circuit intégré FPGA (en anglais field-programmable gate array). Selon une forme de réalisation illustrative, le circuit imprimé flexible 28 comporte au moins deux couches et dans l'exemple illustré les deux couches suivantes : une couche de circuit et une couche de plan de masse. L'ensemble des bus 30, 32 et 34, capteurs 22 et circuits 36 se trouvent sur une seule couche, la couche de circuit. Du fait de cette architecture, le circuit 28 est flexible pour épouser au mieux les formes de l'aéronef, comme par exemple les bords d'attaque de la voilure. Pour augmenter encore sa flexibilité, le boitier du circuit 36 de commande est choisi de forme longiligne par exemple en forme de barrette parallélépipédique de section rectangulaire : le boitier du circuit 36 de commande est mis en place sur le circuit 28 imprimé de manière que la direction longitudinale du circuit 36 soit orthogonale à la direction longitudinale du circuit 28 imprimé (figure 4) : le circuit 36 de commande est placé transversalement au circuit 28 imprimé. De cette manière, en s'étendant sur une longueur moins grande longitudinalement, il permet une plus grande flexibilité du circuit 28.

Comme représenté sur la figure 4, les capteurs ayant tous la même adresse, un composant interface 44 est placé entre chaque capteur 22 et le bus 34 de collecte et permet de modifier l'adresse du capteur de manière différente pour chaque capteur de manière à ce qu'il puisse être identifié par le ou les circuits de commande associés et l'unité 19 centrale. Le composant peut par exemple appliquer un décalage, une translation, à l'adresse du capteur différent pour chaque capteur. Le circuit 36 de commande contrôle les capteurs 22 qui lui sont affectés, récupère leurs données et les envoie via les bus 30, 32 de communication de données à l'unité centrale.

Le dispositif de rebouclage se présente sous tout type de forme possible. Dans la forme illustrée, le bus 42 du dispositif de rebouclage est lié aux bus 30 et 32 du dispositif de mesure 10 à l'aide d'un film conducteur anisotrope mais pourrait l'être de toute autre manière possible. Le film conducteur anisotrope étant rigide, il assure une bonne tenue mécanique tout en assurant la conduction électrique.

Le dispositif d'extension 18 est un dispositif quasi identique au dispositif 10 à savoir qu'il comprend un support et un circuit 46 imprimé flexible à la différence près que le circuit 46 ne comprend qu'un seul circuit 36 de commande et des capteurs 22 liés au circuit 36 par au moins un bus 48 de collecte. Le circuit 36 de commande se trouve à l'extrémité 50 de liaison, extrémité du circuit destinée à être associée à un dispositif 10 de mesure. Le dispositif d'extension comprend de la même façon que le dispositif de rebouclage un bus 42 destiné à reboucler le bus 30 sur le bus 32. Le circuit 36 de commande du dispositif d'extension est connecté au bus 42 et à l'ensemble des capteurs 22 par le ou les bus 48 de collecte et dans la forme illustrée au nombre de deux. Dans la forme illustrée, les deux bus 48 de collecte sont parallèles entre eux et à la direction longitudinale du circuit 46 et sont prévus de part et d'autre de la ligne 23 formée par les capteurs. Les capteurs 22 sont liés à l'un ou à l'autre des bus 48 et dans la forme illustrée d'un capteur à un capteur voisin alternativement à l'un puis à l'autre bus. Comme les capteurs 22 ne sont connectés qu'à un seul circuit de commande 36, l'alternance de connexion des capteurs sur les deux bus 48 permet de conserver un capteur sur deux en cas de défaillance d'un des deux bus. Du fait que le circuit du dispositif d'extension ne comprenne que des capteurs 22 liés par un ou plusieurs bus 48, il est possible de couper le circuit flex à n'importe quelle longueur (entre les capteurs 22). Comme montré sur les figures 2 et 5, le circuit de commande 36 en barrette est connecté au dispositif de mesure 10 et le circuit 46 imprimé présente une plus faible largeur que le circuit 28 du dispositif 10. Le dispositif d'extension dans la forme illustrée présente ainsi une forme de T. Le dispositif d'extension du fait d'une plus grande flexibilité permet d'adapter le système à toute forme géométrique. Comme représenté sur la figure 5, il est même possible sur des formes à reliefs variés et plus complexes de n'utiliser que des dispositifs d'extension que l'on chaine. De taille beaucoup plus faible et d'une beaucoup plus grande flexibilité, ils s'adaptent à n'importe quelle forme de surface sur laquelle appliquer le système de mesure. Une unité centrale 52 est connectée au circuit de commande d'un premier dispositif d'extension et les circuits de commande des dispositifs d'extension suivants sont connectés les uns aux autres. L'unité 52 peut être la même que l'unité 19 ou pas. Le système fonctionne également selon une architecture maitre esclave : l'unité gère les échanges avec les circuits de commande 36. Le circuit 36 de commande de chaque dispositif d'extension reçoit les mesures réalisées par l'ensemble des capteurs 22 et les envoient vers l'unité 19 centrale. Chaque capteur a sa propre adresse grâce au composant 44 interface et peut s'identifier auprès du circuit 36 de commande correspondant ainsi qu'auprès de l'unité 52. Chaque circuit de commande 36 a sa propre adresse et s'identifie auprès de l'unité 19 centrale avec son adresse.

La présente invention ne se limite pas au domaine aéronautique. Le système de mesure selon la présente invention pourrait être utilisé dans bien d'autres domaines techniques et par exemple dans le domaine de véhicules spatiaux, aériens, terrestres ou maritimes. L'aéronef est considéré comme un véhicule aérien. Il peut également être utilisé sur un objet fixe placé dans un écoulement d'air comme par exemple une partie d'un véhicule testé en soufflerie. Il peut également servir à caractériser une soufflerie en accolant le dispositif de mesure sur une ou plusieurs parois de celle-ci, la soufflerie étant considérée comme objet fixe dans un écoulement.

## Revendications

1. Dispositif de mesure (10) susceptible d'être accolé sur une paroi d'un objet mobile ou d'un objet fixe se trouvant dans un écoulement comprenant des capteurs (22) et un support (20) présentant des logements (24) pourvus d'une ouverture débouchant dans lesquels sont prévus les capteurs (22), le support (20) comprenant une cavité (26) dans laquelle est logé un circuit imprimé (28) flexible, **caractérisé en ce que** le circuit (28) est à bus hiérarchisés comprenant deux bus de communication de données (30, 32) débouchant aux deux extrémités longitudinalement du support (20) et un bus de collecte de données (34) non débouchant, le bus (34) de collecte de données liant des circuits (36) de commande, chaque circuit (36) de commande étant lié à l'un des bus (30) de communication, les capteurs (22) étant liés au bus (34) de collecte de données de manière distribuée de part et d'autre de chaque circuit (36) de commande, l'ensemble des capteurs (22) entre deux circuits (36) de commande transmettant leurs données aux deux circuits (36) de commande les entourant.

2. Dispositif de mesure selon la revendication 1, **caractérisé en ce que** chaque circuit (36) de commande comprend un boitier de forme longiligne dont la direction longitudinale est orthogonale à la direction longitudinale du circuit (28) imprimé.

3. Dispositif de mesure selon l'une des revendications 1 ou 2, **caractérisé en ce que** les capteurs sont disposés sur une ligne (23) parallèle à la direction longitudinale du circuit (28) et parallèle aux bus (30), (32) et (34).

4. Système de mesure **caractérisé en ce qu'**il comprend au moins un dispositif (10) de mesure selon l'une des revendications 1 à 3, une unité (19) centrale connecté à un dispositif de mesure, au moins un dispositif d'extrémité (17) comprenant une impédance de bout de ligne.

5. Système de mesure selon la revendication 4, **caractérisé en ce qu'**il comprend un dispositif (16) de rebouclage comprenant un bus de rebouclage (42) dont l'une des extrémités est liée au bus (30) de communication de données et l'autre extrémité au bus de communication de données (32).

6. Système de mesure selon la revendication 5, **caractérisé en ce qu'**il comprend un dispositif (18) d'extension comportant un circuit imprimé flexible comprenant un seul circuit (36) de commande à l'une des extrémités (50) de liaison du circuit connecté au bus (42) de rebouclage et des capteurs (22) liés à au moins un bus (48) de collecte du dispositif d'extension lui-même ou eux-mêmes connectés au circuit (36) de commande.

7. Système de mesure selon la revendication 6, **caractérisé en ce que** le dispositif (18) d'extension comprend deux bus (48) de collecte, les capteurs (22) étant liés à l'un ou l'autre des bus.

8. Système de mesure selon l'une des revendications 5 à 7, **caractérisé en ce que** le bus (42) de rebouclage du dispositif d'extrémité (17) et d'extension (18) est lié aux bus de communication de données (30) et (32) du dispositif de mesure (10) à l'aide d'un film conducteur anisotrope.

9. Objet fixe ou mobile présentant une paroi se trouvant dans un écoulement pourvue d'un système de mesure selon l'une des revendications 4 à 8.

10. Objet selon la revendication 9, **caractérisé en ce qu'**il s'agit d'un aéronef.

11. Objet selon la revendication 10, **caractérisé en ce que** les extrémités (40) de rebouclage des dispositifs (10) de mesure sont installées en amont du flux de l'écoulement d'air autour de l'aéronef.

12. Procédé de mesure mis en oeuvre à l'aide d'un système de mesure selon l'une des revendications 4 à 8, caractérisé en ce l'ensemble des capteurs (22) liés au bus (34) de collecte entre deux circuits (36) de commande dits respectivement primaire et secondaire transmettent leurs données auxdits deux circuits (36) par le bus (34) de collecte, l'un desdits circuits, le circuit primaire, transmettant les données desdits capteurs (22) à l'unité (19) par les bus (30,32) de communication.

13. Procédé de mesure selon la revendication 12, **caractérisé en ce que** lorsque l'unité (19) ne reçoit plus de données d'un circuit (36) primaire, il donne la main au circuit (36) dit secondaire correspondant pour les capteurs concernés.

14. Procédé de mesure selon l'une des revendications 12 ou 13, **caractérisé en ce que** le circuit (36) dit secondaire surveille l'activité du bus le liant au circuit (36) primaire associé et en l'absence d'activité, informe l'unité (19) qui demande alors audit circuit (36) secondaire de lui transmettre les données des capteurs concernés.

## Patentansprüche

1. Messvorrichtung (10), die auf einer Wand eines in einer Strömung befindlichen beweglichen Objekts oder ortsfesten Objekts angefügt werden kann, die Sensoren (22) und einen Träger (20) enthält, der mit einer Durchgangsöffnung versehene Aufnahmen (24) aufweist, in denen die Sensoren (22) vorgesehen sind, wobei der Träger (20) einen Hohlraum (26) enthält, in dem eine flexible gedruckte Schaltung (28) untergebracht ist, **dadurch gekennzeichnet, dass** die Schaltung (28) mit hierarchischen Bussen ist, die zwei an den zwei Enden in Längsrichtung des Trägers (20) mündende Datenkommunikationsbusse (30, 32) und einen nicht mündenden Datensammelbus (34) enthalten, wobei der Datensammelbus (34) Steuerschaltungen (36) verbindet, wobei jede Steuerschaltung (36) mit einem der Kommunikationsbusse (30) verbunden ist, wobei die Sensoren (22) mit dem Datensammelbus (34) in auf beiden Seiten jeder Steuerschaltung (36) verteilter Weise verbunden sind, wobei die Einheit der Sensoren (22) zwischen zwei Steuerschaltungen (36) ihre Daten an die zwei sie umgebenden Steuerschaltungen (36) übertragen.

2. Messvorrichtung nach Anspruch 1, **dadurch gekennzeichnet, dass** jede Steuerschaltung (36) ein längliches Gehäuse enthält, dessen Längsrichtung zur Längsrichtung der gedruckten Schaltung (28) orthogonal ist.

3. Messvorrichtung nach einem der Ansprüche 1 oder 2, **dadurch gekennzeichnet, dass** die Sensoren auf einer Linie (23) parallel zur Längsrichtung der Schaltung (28) und parallel zu den Bussen (30), (32) und (34) angeordnet sind.

4. Messsystem, **dadurch gekennzeichnet, dass** es mindestens eine Messvorrichtung (10) nach einem der Ansprüche 1 bis 3, eine mit einer Messvorrichtung verbundene Zentraleinheit (19), mindestens eine Endvorrichtung (17) enthält, die eine Leitungsendeimpendanz enthält.

5. Messsystem nach Anspruch 4, **dadurch gekennzeichnet, dass** es eine Rückkopplungsvorrichtung (16) enthält, die einen Rückkopplungsbus (42) enthält, von dem eines der Enden mit dem Datenkommunikationsbus (30) und das andere Ende mit dem Datenkommunikationsbus (32) verbunden ist.

6. Messsystem nach Anspruch 5, **dadurch gekennzeichnet, dass** es eine Erweiterungsvorrichtung (18) enthält, die eine flexible gedruckte Schaltung aufweist, die eine einzige Steuerschaltung (36) an einem der Verbindungsenden (50) der mit dem Rückkopplungsbus (42) verbundenen Schaltung und Sensoren (22) enthält, die mit mindestens einem Sammelbus (48) der Erweiterungsvorrichtung verbunden sind, der oder die selbst mit der Steuerschaltung (36) verbunden ist/sind.

7. Messsystem nach Anspruch 6, **dadurch gekennzeichnet, dass** die Erweiterungsvorrichtung (18) zwei Sammelbusse (48) enthält, wobei die Sensoren (22) mit dem einen oder anderen der Busse verbunden sind.

8. Messsystem nach einem der Ansprüche 5 bis 7, **dadurch gekennzeichnet, dass** der Rückkopplungsbus (42) der End-(17) und Erweiterungsvorrichtung (18) mit den Datenkommunikationsbussen (30) und (32) der Messvorrichtung (10) mit Hilfe eines anisotropen leitfähigen Films verbunden ist.

9. Ortsfestes oder bewegliches Objekt, das eine in einer Strömung befindliche Wand aufweist, die mit einem Messsystem nach einem der Ansprüche 4 bis 8 versehen ist.

10. Objekt nach Anspruch 9, **dadurch gekennzeichnet, dass** es sich um ein Luftfahrzeug handelt.

11. Objekt nach Anspruch 10, **dadurch gekennzeichnet, dass** die Rückkopplungsenden (40) der Messvorrichtungen (10) stromaufwärts vor dem Fluss der Luftströmung um das Luftfahrzeug herum installiert sind.

12. Messverfahren, das mit Hilfe eines Messsystems nach einem der Ansprüche 4 bis 8 durchgeführt wird, **dadurch gekennzeichnet, dass** die Einheit der zwischen zwei Steuerschaltungen (36), einer primären bzw. einer sekundären, mit dem Sammelbus (34) verbundenen Sensoren (22) ihre Daten an die zwei Schaltungen (36) über den Sammelbus (34) übertragen, wobei eine der Schaltungen, die Primärschaltung, die Daten der Sensoren (22) an die Einheit (19) über die Kommunikationsbusse (30, 32) überträgt.

13. Messverfahren nach Anspruch 12, **dadurch gekennzeichnet, dass**, wenn die Einheit (19) keine Daten mehr von einer Primärschaltung (36) empfängt, sie der entsprechenden so genannten Sekundärschaltung (36) für die betroffenen Sensoren hilft.

14. Messverfahren nach einem der Ansprüche 12 oder 13, **dadurch gekennzeichnet, dass** die so genannte Sekundärschaltung (36) die Aktivität des sie mit der zugeordneten Primärschaltung (36) verbindenden Busses überwacht, und in Abwesenheit einer Aktivität die Einheit (19) informiert, die dann die Sekundärschaltung (36) auffordert, ihr die Daten der betroffenen Sensoren zu übertragen.

## Claims

1. Measurement device (10) which can be joined to a wall of a mobile object or of a fixed object located in a stream comprising sensors (22) and a support (20) having recesses (24) provided with an emerging opening in which the sensors (22) are arranged, the support (20) comprising a cavity (26) in which a flexible printed circuit (28) is accommodated, **characterized in that** the circuit (28) has hierarchized buses comprising two data communication buses (30, 32) emerging at the two longitudinal ends of the support (20) and a non-emerging data acquisition bus (34), the data acquisition bus (34) connecting control circuits (36), each control circuit (36) being connected to one of the communication buses (30), the sensors (22) being connected to the data acquisition bus (34) in a distributed fashion on either side of each control circuit (36), all of the sensors (22) between two control circuits (36) transmitting their data to the two control circuits (36) surrounding them.

2. Measurement device according to Claim 1, **characterized in that** each control circuit (36) comprises a housing of streamlined shape, the longitudinal direction of which is orthogonal to the longitudinal direction of the printed circuit (28).

3. Measurement device according to either of Claims 1 and 2, **characterized in that** the sensors are arranged on a line (23) which is parallel to the longitudinal direction of the circuit (28) and parallel to the buses (30), (32) and (34).

4. Measurement system, **characterized in that** it comprises at least one measurement device (10) according to one of Claims 1 to 3, a central unit (19) connected to a measurement device, and at least one end device (17) comprising a line-end impedance.

5. Measurement system according to Claim 4, **characterized in that** it comprises a loopback device (16) comprising a loopback bus (42), one of the ends of which is connected to the data communication bus (30) and the other end of which is connected to the data communication bus (32).

6. Measurement system according to Claim 5, **characterized in that** it comprises an extension device (18) comprising a flexible printed circuit comprising a single control circuit (36) at one of the connection ends (50) of the circuit which is connected to the loopback bus (42) and sensors (22) connected to at least one acquisition bus (48) of the extension device itself or themselves connected to the control circuit (36).

7. Measurement system according to Claim 6, **characterized in that** the extension device (18) comprises two acquisition buses (48), the sensors (22) being connected to one or other of the buses.

8. Measurement system according to one of Claims 5 to 7, **characterized in that** the loopback bus (42) of the end device (17) and extension device (18) is connected to the data communication buses (30) and (32) of the measurement device (10) by means of an anisotropic conductive film.

9. Fixed or mobile object having a wall located in a stream and provided with a measurement system according to one of Claims 4 to 8.

10. Object according to Claim 9, **characterized in that** it is an aircraft.

11. Object according to Claim 10, **characterized in that** the loopback ends (40) of the measurement devices (10) are installed upstream of the flow of the air stream around the aircraft.

12. Measurement method implemented by means of a measurement system according to one of Claims 4 to 8, **characterized in that** all of the sensors (22) connected to the acquisition bus (34) between two control circuits (36), referred to as the primary and secondary circuits, respectively, transmit their data to said two circuits (36) via the acquisition bus (34), one of said circuits, the primary circuit, transmitting the data from said sensors (22) to the unit (19) via the communication buses (30, 32).

13. Measurement method according to Claim 12, **characterized in that**, when the unit (19) no longer receives data from a primary circuit (36), it hands over to the corresponding circuit (36) referred to as the secondary circuit for the sensors in question.

14. Measurement method according to either of Claims 12 and 13, **characterized in that** the circuit (36) referred to as the secondary circuit monitors the activity of the bus connecting it to the associated primary circuit (36) and, in the absence of activity, informs the unit (19), which then requests said secondary circuit (36) to transmit the data to it from the sensors in question.
